# EUROPEAN PATENT SPECIFICATION

(11) **EP 0 952 038 B1**
(45) Date of publication and mention of the grant of the patent: **29.08.2007**
(21) Application number: 98952751.0
(22) Date of filing: 12.11.1998
(51) Int. Cl.: B60R 13/02, F16B 5/00

(54) **RAPID FIXING OF A DOOR LINING TO A DOOR STRUCTURAL ASSEMBLY OR A DOOR MODULE**
SCHNELLE BEFESTIGUNG VON EINER TÜRVERKLEIDUNG AN EINEN TÜRKONSTRUKTIONSAUFBAU ODER AN EIN TÜRMODUL
FIXATION RAPIDE DE GARNITURE DE PORTE A UN ENSEMBLE STRUCTUREL PORTE OU A UN MODULE DE PORTE

(30) Priority: 13.11.1997 ES 9702376
(43) Date of publication of application: 27.10.1999
(73) Proprietor: GRUPO ANTOLIN-INGENIERIA, S.A., 09080 Burgos (ES)
(72) Inventor: BARRERO SERRANO, Felipe, E-09007 Burgos (ES); MARCOS GONZALES, César, E-09002 Burgos (ES); GONZALES SAIZ, José Ignacio, E-09001 Burgos (ES); MARTINEZ MORAL, Francisco Javier, E-09004 Burgos (ES); MANSO MONEO, Alberto, E-09004 Burgos (ES); ROMERO MAGARINO, Antonio, E-09006 Burgos (ES); MANZANAS RODRIGUEZ, Ricardo, E-34230 Torquemada (ES)
(74) Representative: Esteban Perez-Serrano, Maria Isabel
(86) International application number: PCT/ES1998/000306
(87) International publication number: WO 1999/025587

(56) References cited:
- WO-A-97/28977
- WO-A-98/42527
- DE-A- 3 330 221
- ES-T3- 2 077 362
- US-A- 4 648 208
- US-A- 5 308 138

## Description

This invention relates to a system for the fast fixing of a door inner trim onto door a structural assembly or door module.

Within the field of the automobile industry, the fixing of door trim items, logically to be fitted onto the door module itself or onto structural assemblies, has a great importance as it affects the cost of the final assembly. Therefore, great dedication has to be put on the speed and efficiency with which these trim items are situated onto the said bases.

In turn, these trim items are prepared in order to receive different accessories, which must also be fixed with fast action items and ad free as possible of manual intervention by workers, so that a saving is achieved in time and in labour applied.

The existence is known, through US-A-5,308,138, of a panel for vehicle doors that includes several components items of the door. This panel is an internal item or inner shell, on which the final trim is fitted. This panel does not have an upper support in the body of the door.

A connection system is known, by means of DE-A-3320221, for surrounds and similar items with a union to the equal items, i.e. side or lateral union, that does not include any kind of upper closure of an item with the adjacent one.

On the other hand through EP-A-0908633, fast assembly and disassembly couplers or clamps are known that are placed in and removed from the integrated assembly with complete ease by using conventional tools, such as screwdrivers or similar.

One basic object of the invention is to provide a simple door inner trim that can be assembled very fast onto the door module.

In order to put this objective into practice, the invention presents a door trim with an upper support for it to be fixed onto the inner upper end of the door or door module. The trim includes at least one or two protruding L-shaped or T-shaped appendices on its rear side that correspond with suitably situated holes in the door or door module.

Assembly of the system is carried out by means of a movement quasi-parallel to the outer reference plane of the door shell or door module, during which the said appendices are inserted into the holes and later achieving, by means of the use of the previously mentioned coupler or clamp, the necessary fixing of the assembly.

The assembly includes at least one appendix associated with one hole and least one coupler, so that with both basic items the objective of the invention is achieved.

Normally, the appendices and the couplers in a specific assembly are carried out in a regular distribution, so that stable fixing is obtained, at least minimally, and in this sense the number and position of these items will be suited to the shape of each kind of trim.

The trim system can also be materialised based on one or more fast assembly and disassembly couplers, by means of a movement quasi perpendicular to the outer reference plane of the door shell or door module, during which the coupler is inserted into the holes situated in this door shell or module, thus achieving the necessary fixing.

These methods of operating can be completed by means of the assistance of clips, screws or other conventional means of fixing, so that the assembly of these items will be carried out once the trim has been fixed in accordance with the procedures described previously.

These systems can also use a single male-female connector with floating bases, with the aim of improving its guiding in order to achieve the electrical communication between the trim and the rest of the door or door module.

In this respect, it is pointed out that this connector would gather together all the terminals of the trim, being the only electrical nexus between the trim, with all the subsystems situated inside it, and the rest of the vehicle on which the complementary part of the said connector would be situated.

All these and other details of the invention will be appreciated in greater detail on the sheet of drawings which is attached, in which the following are represented:
- Figure 1 is a cross section view that shows the trim presented in relation to the door shell or door module.
- Figure 2 represents a plan view of the outer view of the trim.
- Figures 3, 4, 5 and 6 show views of different T-shaped and L-shaped appendices used in accordance with the invention.
- Figure 7 shows the trim secured to the door shell or door module by means of a coupler and appendices.
- Figure 8 represents the trim secured to the door shell or door module by means of couplers.
- Figure 9 is an enlargement of the previous figure, showing a supplementary traditional clip.
- Figure 10 makes it possible to appreciate the connector portion in a specific assembly.
- Figure 11 is another variant of the above.

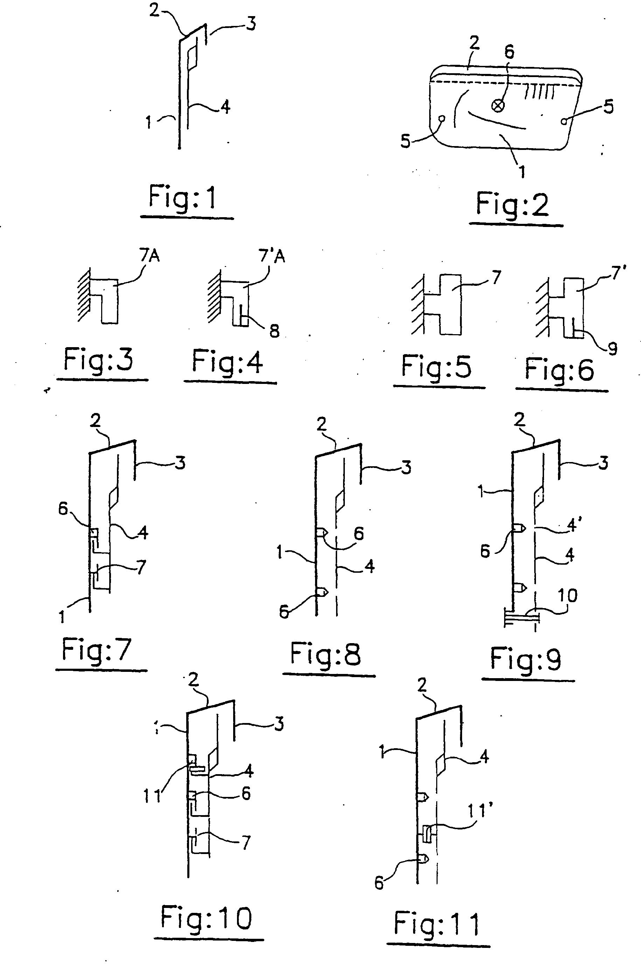

Looking now at Figure 1, we can see the trim (1) in relation to the door shell or door module (4), with the upper support (2, 3) of the trim arranged over the upper inner portion of the door shell or door module.

In Figure 2 we can appreciate the trim from its exterior, with its upper edge (2), two areas (5) for the appendices and a position for the coupler (6).

In Figures 3 to 6 we can deduce the side elevations of the L-shaped and T-shaped appendices (7, 7A) used by the invention, as well as the variants with a spring function (7', 7'A), appendices that protrude out form the rear side of the trim in order to become housed in the holes in the door shell or door module (4). The spring function of the appendices is determined by the way in which cuts (8,9) are made in them, as shown in Figures 4 and 6.

In Figure 7 we can appreciate the trim (1) with the coupler (6) and the appendix (7), as well as the upper folded portion (2,3) that is situated over the upper end of the door shell or door module (4). In this particular case, the unit is assembled by means of a movement quasi parallel to the outer reference plane of the base (4), as already explained previously.

In the same way, the variant shown in Figure 8 makes it possible to appreciate the trim (1) with the couplers (6) regularly distributed so that they ensure the suitable fixing of the trim to the door shell or door module (4). In this case, the system is assembled by means of a movement quasi perpendicular to the outer reference plane of the shell (4).

With reference to Figure 9, we can appreciate here the solution offered in Figure 8, to which has been included the auxiliary clip (10), whose assembly will be carried out once that the trim (1) has been fixed, as already described previously.

Finally, Figures 10 and 11, with reference to Figures 7 and 8, respectively, allow us to appreciate the male-female connectors (11, 11') with their floating bases, to improve their guidance systems in order to achieve the proper electrical communication between the trim (1) and the rest of the door or door module (4). These connectors (11, 11') gather together all the terminals of the wiring for the trim and are the only electrical nexus between the said trim, with all the electrical subsystems situated inside it, and the rest of the vehicle, in which the complementary part of the connector will be located.

## Claims

1. System for fast fixing of door trim (1) to door structural assembly, door shell or door module (4) comprising a totally finished door inner trim for connection to said door shell or to a door module of a vehicle, **characterised in that** the trim (1) has a folded upper outer portion (2) for it to be supported on the inner upper end of the door shell or door module, with at least one appendix (7, 7A) protruding from the side of the trim which is towards the door and becoming housed in the corresponding hole(s) cut in the door shell or in the door module and at least one fast assembly/disassembly coupler (6) which, by passing through the trim, secures it to the said door shell or door module, **in that** the trim is fitted by means of a movement quasi parallel to the door shell or door module outer plane, **in that** the appendices protruding from the trim are T-shaped or L-shaped and the couplers arc also received in suitably situated holes in said door shell or door module.

2. System for fast fixing of door trim to door structural assembly or door module, in accordance with claim 1, **characterised in that** the appendices protruding from the trim (7, 7 A) have openings in at least one of the their wings in order to also produce a spring effect.

3. System for fast fixing of door trim (1) to door structural assembly, door shell or door module(4), comprising a totally finished door inner trim for connection to said door shell or door module of a vehicle, **characterised in that** the trim (1) has folded upper outer portion (2) for it to be supported on the inner upper end of the door shell or door module and **in that** fast assembly/disassembly couplers (6) are provided, which by passing through the trim secure it to the door shell or door module, and, by being housed in suitably situated holes in the door shell or door module, fix said trim in a movement quasi perpendicular to the said door shell or door module outer reference plane.

4. System for fast fixing of door trim to door structural assembly or door module, in accordance with claim 1, **characterized in that** the assembly is completed with clips, screws or other conventional fixing systems, whose assembly is carried out once the trim has been fixed.

5. System for fast fixing of door trim to door structural assembly or door module, in accordance with claims 1 or 3, **characterized in that** a single male-female connector (11,11') is used, that gathers together all the terminals of the wiring in the trim and acts as a nexus of union between all the subsystems situated in the said trim and the rest of the vehicle, in which the complementary part of the connector is housed, and with this connector having one of its bases floating in order to favour guiding into position.

## Patentansprüche

1. System zum schnellen Zusammenbau einer Türverkleidung (1) in der strukturellen Türanordnung, Türrahmen oder Türmodul (4), wobei es eine vollständig fertige innere Türverkleidung umfasst zum Verbinden mit besagtem Türrahmen oder einem Türmodul eines Fahrzeugs, **dadurch gekennzeichnet, dass** die Verkleidung einen oberen äusseren Teil (2) aufweist, der auf dem inneren oberen Ende des Türrahmens oder Türmoduls auflagernt, mit mindestens einem Fortsatz (7, 7A), der an der Seite der Verkleidung herausragt, die der Tür zugerichtet ist und aufgenommen wird von einer entsprechenden Vertiefung oder Vertiefungen, die in den Türrahmen oder in das Türmodul geschnitten sind und wenigstens einer Steckvorrichtung (6) zum schnellen Montieren/Demontieren, die beim Durchstecken durch die Verkleidung diese an dem besagten Türrahmen oder Türmodul befestigt, dadurch dass die Verkleidung durch eine praktisch parallele Bewegung zur äusseren Ebene des Türrahmens oder Türmoduls angepasst wird, dadurch, dass die Vorsprünge, die aus der Verkleidung hervorstehen T-förmig oder L-förmig sind und die Steckvorrichtungen auch in angemessen angebrachten Öffnungen in dem besagten Türrahmen oder Türmodul aufgenommen werden.

2. System zum schnellen Zusammenbau einer Türverkleidung (1) in der strukturellen Türanordnung, Türrahmen oder Türmodul (4) gemäss Anspruch 1, **dadurch gekennzeichnet, dass** die Fortsätze, die aus der Verkleidung hervorstehen (7, 7A) Öffnungen in wenigstens einer ihrer Flügel aufweisen, um auch eine Federwirkung zu erzielen.

3. System zum schnellen Zusammenbau einer Türverkleidung (1) in der strukturellen Türanordnung, Türrahmen oder Türmodul (4), wobei es eine vollständig fertige innere Türverkleidung umfasst zum Verbinden mit besagtem Türrahmen oder einem Türmodul eines Fahrzeugs, **dadurch gekennzeichnet, dass** die Verkleidung (1) ein gefaltetes oberes äussere Teil (2) aufweist, das auf dem inneren oberen Ende des Türrahmens oder Türmoduls auflagert und dadurch, dass Steckvorrichtungen (6) zum schnellen Montieren/Demontieren vohranden sind, die die Verkleidung an dem Türrahmen oder Türmodul befestigen, indem sie durch den Türrahmen verlaufen und durch die Aufnahme in angemessen angebrachten Öffnungen in dem Türrahmen oder Türmodul diese Verkleidung in einer praktisch senkrechten Bewegung an der äusseren Referenzebene des besgten Türrahmens oder Türmoduls befestigen.

4. System zum schnellen Zusammenbau einer Türverkleidung mit der strukturellen Türanordnung oder Türmodul gemäss Anspruch 1, **dadurch gekennzeichnet, dass** die Anordnung mit Klammern, Schrauben oder anderen herkömmlichen Befestigungssystemen vervollständigt wird, deren Befestigung erfolgt, wenn die Verkleidung befestigt ist.

5. System zum schnellen Zusammenbau einer Türverkleidung mit der strukturellen Türanordnung oder Türmodul gemäss Anspruch 1 oder 3, **dadurch gekennzeichnet, dass** eine einzige Steckverbindung (11, 11') verwendet wird, die alle Anschlussklemmen der Verkabelung in der Verkleidung zusammenfasst und als eine Verbindung zwischen allen Untersystemen funktioniert, die sich in der besagten Verkleidung und dem Rest des Fahrzeugs befinden, in dem der ergänzenden Teil der Steckverbindung aufgenommen wird und eines der Unterteile gleitet, um besser in die Position gebracht werden zu können.

## Revendications

1. Système de fixage rapide de chambranle de porte (1) à un ensemble structural de porte, blindage porte ou module de porte (4) comprenant un chambranle intérieur de porte totalement terminé pour sa connexion audit blindage de porte ou à un module de porte d'un véhicule, **caractérisé en ce que** le chambranle (1) a une portion (2) extérieure supérieure pliée pour être supporté à l'extrémité supérieure intérieure du blindage de porte ou module de porte, avec au moins un appendice (7, 7A) en vol à faux du côté du chambranle qui est orienté vers la porte y qui est logé dans le(s) orifice(s) correspondant(s) aménagé(s) dans le blindage de porte ou dans le module de porte et au moins un coupleur (6) d'assemblage/désassemblage rapide qui, en passant à travers le chambranle, il le fixe audit blindage de porte ou module de porte, **en ce que** le chambranle est monté au moyen d'un mouvement quasi parallèle au plan extérieur du blindage de porte ou module de porte, **en ce que** les appendices en vol à faux du chambranle sont sous forme de T ou sous forme de L y les coupleurs sont également reçus dans des orifices situés adéquatement dans ledit blindage de porte ou module de porte.

2. Système de fixage rapide de chambranle de porte à un assemblage structural, blindage de porte ou module de porte selon la revendication 1, **caractérisé en ce que** les appendices en vol á faux du chambranle (7, 7A) ont des ouvertures dans au moins une de leurs ailes pour produire également un effet de ressort.

3. Système de fixage de chambranle (1) de porte à un assemblage structural, blindage de porte ou module de porte (4), comprenant un chambranle intérieur de porte totalement terminé pour sa connexion audit blindage de porte ou module de porte d'un véhicule, **caractérisé en ce que** le chambranle (1) a une portion (2) extérieure supérieure pliée pour être supporté à l'extrémité supérieure intérieure du blindage de porte ou module de porte, et **en ce que** des coupleurs d'assemblage/désassemblage (6) rapide sont prévus, qui, en passant à travers le chambranle, ils le fixe audit blindage de porte ou module de porte, et en étant logés dans les orifices situés adéquatement dans le blindage de porte ou module de porte, ils fixent ledit chambranle au moyen d'un mouvement quasi perpendiculaire au plan extérieur du blindage de porte ou module de porte.

4. Système de fixage rapide de chambranle de porte à un assemblage structural ou module de porte selon la revendication 1, **caractérisé en ce que** l'assemblage est complété par des clips, vis ou d'autres systèmes conventionnels de fixage, ledit assemblage ayant lieu une fois que le chambranle a été fixé.

5. Système de fixage rapide de chambranle de porte à un assemblage structural ou module de porte selon les revendications 1 ou 3, **caractérisé en ce que** l'on utilise le connecteur mâle-femelle (11, 11') qui reçoit conjointement toutes les bornes du câblage dans le chambranle y qui agit comme un point d'union entre tous les sous-systèmes situés dans ledit chambranle et le reste du véhicule, dans lequel est logée la partie complémentaire du connecteur, ce connecteur ayant une de ses bases flottantes pour favoriser le guidage sur place.
